# EUROPÄISCHE PATENTSCHRIFT

(11) **EP 1 580 855 B1**
(45) Veröffentlichungstag und Bekanntmachung des Hinweises auf die Patenterteilung: **09.02.2011**
(21) Anmeldenummer: 05002661.6
(22) Anmeldetag: 09.02.2005
(51) Int. Cl.: H02B 1/38

(54) **Gehäuse für die Elektroinstallation**
Electrical enclosure
Boîtier électrique

(30) Priorität: 09.03.2004 DE 102004011762
(43) Veröffentlichungstag der Anmeldung: 28.09.2005
(73) Patentinhaber: Günther Spelsberg GmbH & Co. KG, 58579 Schalksmühle (DE)
(72) Erfinder: Hauck, Dirk, 58579 Schalksmühle (DE); Gebauer, Klaus, 58579 Schalksmühle (DE); Quardt, Dirk, Dipl.-Ing., 58638 Iserlohn (DE); Spelsberg, Holger, Dipl.-Ing., 58507 Lüdenscheid (DE)
(74) Vertreter: Michalski Hüttermann & Partner Patentanwälte

(56) Entgegenhaltungen:
- GB-A- 2 308 863
- GB-A- 2 313 870
- US-A- 5 944 397

## Beschreibung

Die Erfindung betrifft ein Gehäuse für die Elektroinstallation, mit einer ersten Tür und einer Mehrzahl von zweiten Tür, wobei die Türen im geöffneten Zustand einen Zugang zum Innenraum des Gehäuses gewährleisten und die erste Tür im geschlossenen Zustand verschließbar ist, und wobei eine Verschlußeinrichtung vorgesehen ist, die nur bei geöffneter erster Tür betätigbar und damit in einen aktivierten oder einen deaktivierten Zustand versetzbar ist und im aktivierten Zustand bewirkt, daß die zweiten Türen im geschlossenen Zustand verschlossen sind. Ein derartiges Gehäuse ist jeweils aus der GB-A-2 308 863, der US-A-5 944 397 und der GB-A-2 313 870 bekannt.

Die Erfindung geht also von einem Gehäuse mit einer Mehrzahl von Türen aus, die z. B. durch Verschwenken geöffnet und geschlossen werden können. In geöffnetem Zustand einer Tür kann durch die Türöffnung hindurch auf den Innenraum des Gehäuses zugegriffen werden, z. B. um Installationsarbeiten durchzuführen. Im geschlossenen Zustand der ersten Tür ist diese darüber hinaus verschließbar, z. B. mittels eines Schlüssels. Insofern wird vorliegend zwischen den Begriffspaaren "geöffnet" und "geschlossen" einerseits und "aufgeschlossen" und "verschlossen" andererseits unterschieden. Das erste Begriffspaar bezeichnet dabei die Stellung einer Tür, also ob die Türöffnung offen oder geschlossen ist, während das zweite Begriffspaar bezeichnet, ob die geschlossene Tür z. B. mittels eines Schlüssels verschlossen oder aufgeschlossen ist.

Gehäuse der eingangs genannten Art sind aus der Praxis gut bekannt und werden z. B. von der Anmelderin in verschiedenen Größen und Ausstattungen als Kleinverteilergehäuse für die Elektroinstallation vertrieben. Diese Gehäuse basieren auf Gehäusen, wie in der EP-B-0 062 135 beschrieben, wobei zusätzlich mit einem Schlüssel verschließbare Türen vorgesehen sind. Bei diesen Gehäusen ist häufig gewünscht, daß alle Türen im geschlossenen Zustand verschließbar sind, um die Gehäuse gegen unbefugten Zugriff abzusichern. Dafür sind bei den bekannten Gehäusen alle Türen mit einem Schloß versehen, so daß die Türen einzeln verschließbar sind. Insbesondere bei Gehäusen mit einer Vielzahl von Türen ist das Verschließen dieser Türen jedoch sehr aufwendig, insbesondere wenn für die einzelnen Türen unterschiedliche Schlüssel erforderlich sind.

Es ist die Aufgabe der Erfindung, ein derartiges Gehäuse für die Elektroinstallation anzugeben, das auf einfache Weise mit unterschiedlichen Größen und und/oder mit einer unterschiedlichen Anzahl von Türen ausgestattet werden kann, wobei die Türen auf einfache Weise verschließbar sein sollen.

Diese Aufgabe ist durch den Gegenstand des Patentanspruchs 1 gelöst. Bevorzugte Ausführungsformen sind in den Unteransprüchen beschrieben.

Es ist ist also eine nur bei geöffneter erster Tür betätigbare Verschlußeinrichtung vorgesehen, die einerseits in einen aktivierten Zustand versetzt werden kann, in dem die zweite Tür verschlossen ist, und andererseits in einen deaktivierten Zustand, in dem die zweite Tür aufgeschlossen ist und damit geöffnet werden kann. Als "Schloß" für die Verschlußeinrichtung wirkt dabei die erste Tür, da die Verschlußeinrichtung nur dann betätigbar ist, wenn die erste Tür geöffnet ist. Da die erste Tür verschließbar ist, ist damit bei verschlossener erster Tür im aktivierten Zustand der Verschlußeinrichtung auch die zweite Tür verschlossen und kann nicht geöffnet werden.

Gemäß einer bevorzugten Weiterbildung der Erfindung ist vorgesehen, daß die Verschlußeinrichtung werkzeuglos betätigbar ist, vorzugsweise nämlich von Hand. Diese bevorzugte Weiterbildung der Erfindung hat den Vorteil, daß zum Verschließen des gesamten Gehäuses lediglich ein Schlüssel vorgesehen sein kann, nämlich der für die erste Tür, während das Verschließen der zweiten Tür rein von Hand erfolgen kann.

Als Verschlußeinrichtung zum Verschließen der zweiten Tür kommt eine Vielzahl von unterschiedlichen Einrichtungen entsprechend bekannter Verschlußtechniken in Betracht. Gemäß einer bevorzugten Weiterbildung der Erfindung ist jedoch vorgesehen, daß die Verschlußeinrichtung als Verriegelungseinrichtung mit einem Riegel ausgebildet ist, so daß im aktivierten Zustand der Verschlußeinrichtung ein Öffnen der zweiten Tür mittels des Riegels verhindert wird. Dabei kann vorgesehen sein, daß der Riegel der Verriegelungseinrichtung in eine in der zweiten Tür vorgesehene Ausnehmung eingreift oder auf andere Weise ein Aufschwenken der verschlossenen zweiten Tür verhindert, so daß der Riegel der zweiten Tür eine mechanische Sperre gegen ein Öffnen darstellt.

Ist eine Mehrzahl von zweiten Türen vorgesehen, so weist die Verschlußeinrichtung gemäß einer bevorzugten Weiterbildung der Erfindung für jede zweite Tür eine Verriegelungseinrichtung mit einem Riegel auf, wobei die Verriegelungseinrichtung für die der ersten Tür direkt benachbarten zweiten Tür bei geöffneter erster Tür verriegelbar bzw. entriegelbar ist und die Verriegelungseinrichtungen derart ausgebildet und angeordnet sind, daß die Verriegelung bzw. Entriegelung der der ersten Tür direkt benachbarte zweite Tür eine Verriegelung bzw. Entriegelung auch der anderen zweiten Türen bewirkt. Auf diese Weise kann die Gesamtheit der zweiten Türen mit einem einzigen Handgriff verriegelt werden, was einen erheblichen Vorteil gegenüber dem separaten Abschließen der zweiten Türen darstellt, wie im Stand der Technik erforderlich.

Grundsätzlich kann vorgesehen sein, daß die erste Tür auch dann geschlossen werden kann, wenn die Verschlußeinrichtung deaktiviert ist, die zweiten Türen also nicht verschlossen sind. Gemäß einer bevorzugten Weiterbildung der Erfindung ist jedoch vorgesehen, daß die erste Tür nur dann geschlossen werden kann, wenn die Verschlußeinrichtung aktiviert ist. Auf diese Weise ist sichergestellt, daß ein Verschließen der zweiten Türen nicht vergessen werden kann, da die erste Tür nur dann geschlossen und danach verschlossen werden kann, wenn die zweiten Türen mittels der aktivierten Verschlußeinrichtung verschlossen sind.

Erfingdungsgemäß ist vorgesehen, daß die Verschlußeinrichtung mehrere zusammenwirkende und voneinander lösbare Verriegelungseinrichtungen aufweist, die jeweils einer zweiten Tür zugeordnet sind. Dabei ist vorzugsweise vorgesehen, daß einander benachbarte Verriegelungseinrichtungen derart aneinander fixiert sind, daß die Verriegelungseinrichtungen Zug bzw. Druck aufeinander ausüben können. Ein Verschieben der bei geöffneter erster Tür zugänglichen Verriegelungseinrichtung für die der ersten Tür direkt benachbarten zweiten Tür kann damit ein Verschieben und damit ein Verriegeln auch der anderen Verriegelungseinrichtungen bewirken.

Das Vorsehen von mehreren zusammenwirkenden, voneinander lösbaren Verriegelungseinrichtungen für jeweils eine zweite Tür ist insbesondere deshalb vorteilhaft, da das Gehäuse aus mehreren, voneinander lösbaren Gehäuseabschnitten aufgebaut ist. Auf diese Weise kann die Verschlußeinrichtung nämlich in Abhängigkeit von der Größe, d. h. der Anzahl von Gehäuseabschnitten und damit auch der Anzahl von Türen, individuell für das Gehäuse zusammengestellt werden, was insbesondere aus herstellungstechnischen Gründen und aus Kostengründen vorteilhaft ist.

Im einzelnen gibt es nun eine Vielzahl von Möglichkeiten, das erfindungsgemäße Gehäuse auszugestalten und weiterzubilden. Dazu wird auf die dem Patentanspruch 1 nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt
- Fig. 1a, b: ein Gehäuse gemäß einem bevorzugten Ausführungsbeispiel der Er- findung in geöffnetem bzw. in geschlossenem Zustand,
- Fig. 2a, b: das Zusammensetzen der Verschlußeinrichtung aus mehreren Ver- riegelungseinrichtungen und das Einsetzen der zusammengesetzten Verschlußeinrichtung in das Gehäuse gemäß dem bevorzugten Aus- führungsbeispiel der Erfindung,
- Fig. 3a - d: das Schließen der zweiten Türen des Gehäuses gemäß dem bevor- zugten Ausführungsbeispiel der Erfindung bei entriegelter Ver- schlußeinrichtung,
- Fig. 4a - e: das Verriegeln der Verschlußeinrichtung des Gehäuses gemäß dem bevorzugten Ausführungsbeispiel der Erfindung und
- Fig. 5a - d: das Schließen und Verschließen der ersten Tür des Gehäuses gemäß dem bevorzugten Ausführungsbeispiel der Erfindung.

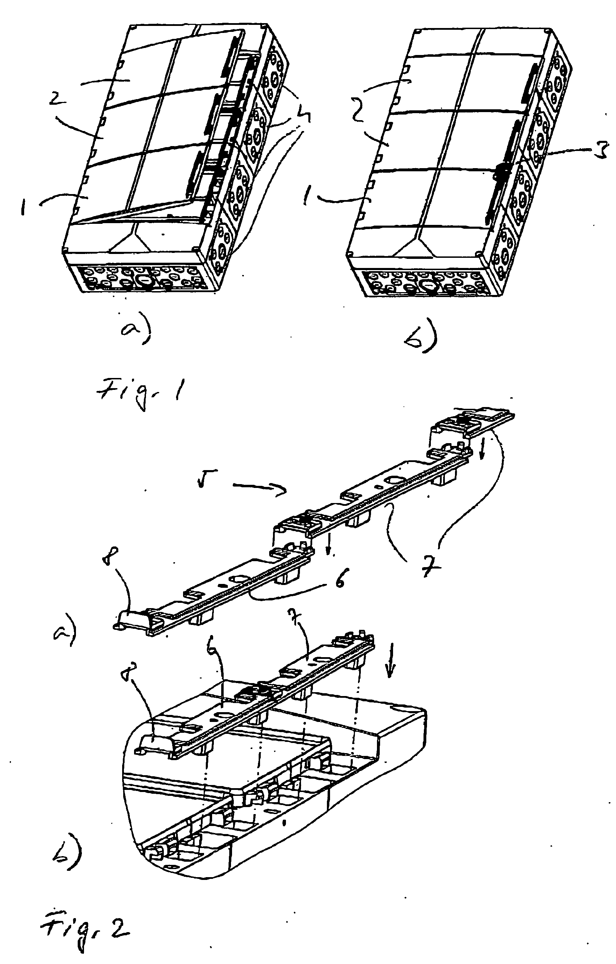

Aus Fig. 1 ist ein Gehäuse für die Elektroinstallation gemäß einem bevorzugten Ausführungsbeispiel der Erfindung ersichtlich. Das Gehäuse weist eine erste Tür 1 und zwei zweite Türen 2 auf. Die Türen 1, 2 sind auf- und zuschwenkbar, und die erste Tür 1 ist mit Hilfe eines Schlüssels 3 in geschlossenem Zustand verschließbar.

Das Gehäuse ist modular aufgebaut, besteht nämlich aus vier Gehäuseabschnitten 4, die zusammengesetzt das Gehäuse bilden. Ein solch modularer Aufbau des Gehäuses ist insofern vorteilhaft, als daß auf diese Weise mit einer Minimalzahl von Grundformen Gehäuse unterschiedlicher Größen, d. h. auch mit einer unterschiedlichen Anzahl von Türen 1, 2, hergestellt werden können.

Wie aus Fig. 2 ersichtlich, ist eine Verschlußeinrichtung 5 vorgesehen, die ebenfalls modular aufgebaut ist. Die Verschlußeinrichtung 5 weist nämlich mehrere Verriegelungseinrichtungen 6, 7 auf, die lösbar aneinander fixiert sind, so daß sie Zug bzw. Druck aufeinander ausüben können. Während Fig. 2a zeigt, daß drei Verriegelungseinrichtungen 6, 7 zusammengesetzt werden können, sind für das aus Fig. 1 ersichtliche Gehäuse gemäß dem bevorzugten Ausführungsbeispiel der Erfindung lediglich zwei Verriegelungseinrichtungen 6, 7 erforderlich. Die Verriegelungseinrichtungen 6, 7 sind nämlich jeweils einer zweiten Tür 2 zugeordnet, die ihrerseits nicht mittels eines Schlüssels verschließbar sind.

Bei den Verriegelungseinrichtungen 6, 7 wird unterschieden zwischen einer sogenannten Master-Verriegelungseinrichtung 6 und wenigstens einer Slave-Verriegelungseinrichtung 7, gegebenenfalls mehreren Slave-Verriegelungseinrichtungen 7, wenn mehr als eine zweite Tür 2 vorgesehen sind. Bei den Verriegelungseinrichtungen 6, 7 unterscheidet sich das Master-Teil von den Slave-Teilen darin, daß beim Master-Teil eine bei geöffneter erster Tür 1 betätigbare Betätigungseinrichtung 8 vorgesehen ist. Diese kann von Hand betätigt werden, nämlich verschoben werden, so daß die Verschlußeinrichtung 5 insgesamt in einen aktivierten Zustand versetzt werden kann, in dem die zweiten Türen 2 verriegelt sind, oder in einen deaktivierten Zustand, in dem sich die zweiten Türen 2 öffnen lassen, wie im einzelnen weiter unten dargestellt.

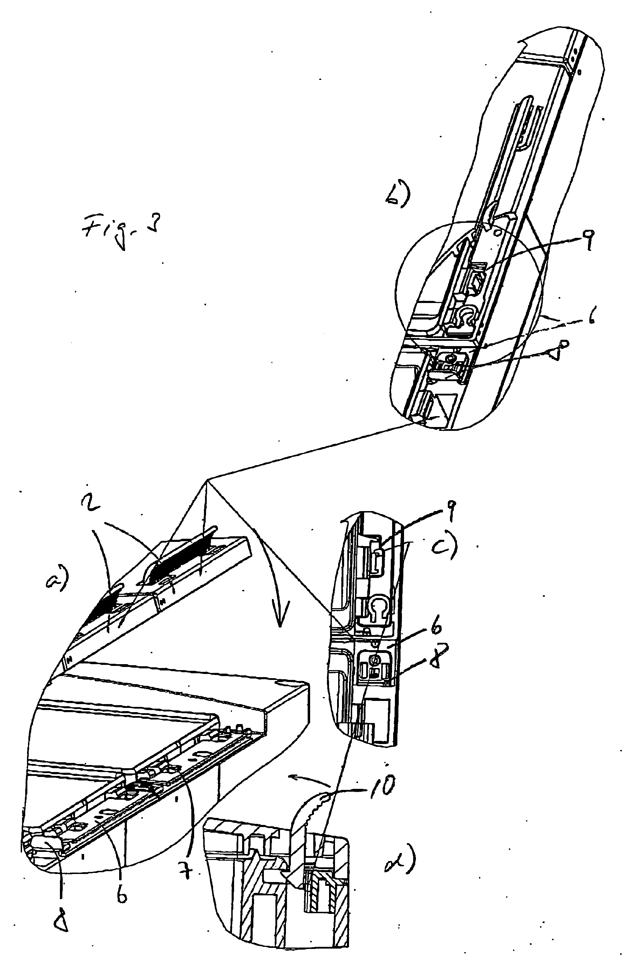

Wie aus Fig. 3 ersichtlich, werden die zweiten Türen 2 in der "Offen"-Stellung der Verschlußeinrichtung 5 geschlossen. In dieser "Offen"-Stellung der Verschlußeinrichtung 5 sind die bei den einzelnen Verriegelungseinrichtungen 6, 7 vorgesehenen Riegel 9 in einer solchen Stellung, in der die zweiten Türen 2 ohne weiteres aufschwenkbar sind. Wie nämlich den Fig. 3b und 3c sowie der Schnittdarstellung in Fig. 3d entnehmbar, kann zum Öffnen einer zweiten Tür 2 ein an der zweiten Tür 2 vorgesehener Türgriff 10 bewegt werden, ohne daß der Riegel 9 hierfür eine mechanische Sperre darstellt.

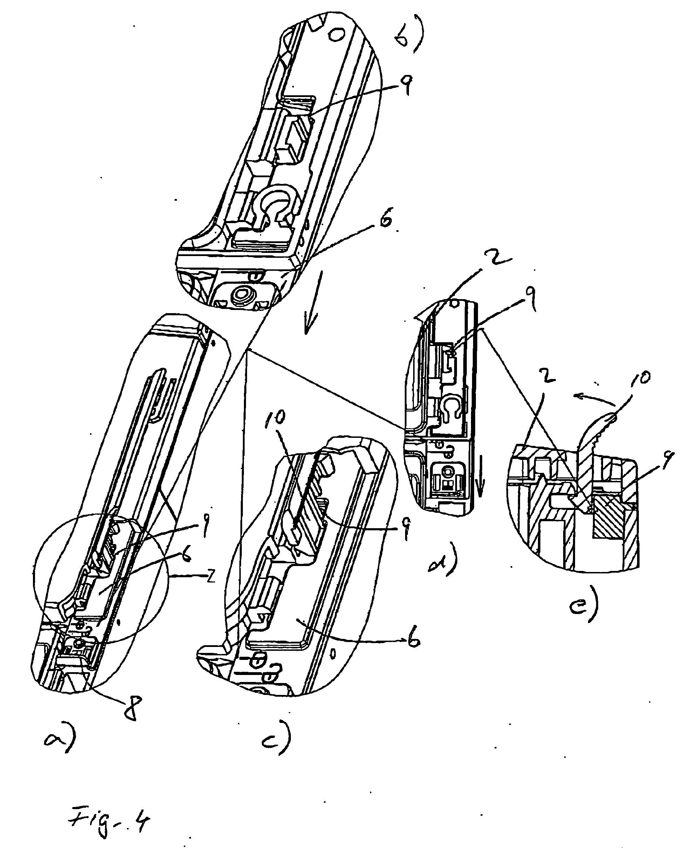

Fig. 4 ist nun entnehmbar, wie die Verschlußeinrichtung 5 bei geschlossenen zweiten Türen 2 und geöffneter erster Tür 1 von der "Offen"-Stellung in die "Verschlossen"-Stellung gebracht wird. Dazu wird die Verschlußeinrichtung 5 manuell über die Betätigungseinrichtung 8 verschoben, und zwar erfolgt ein Verschieben der Master-Verriegelungseinrichtung 6 in Richtung zur offenen Türöffnung der ersten Tür 1 hin. Auf diese Weise kommen die Riegel 9 der Verriegelungseinrichtungen 6, 7 in eine solche Stellung, in der, wie insbesondere den Fig. 4c bis 4e entnehmbar, der Türgriff 10 der zweiten Türen 2 zum Öffnen der zweiten Türen 2 nicht mehr bewegt werden kann. Es kommt nämlich zu einem Anschlagen des Türgriffs 10 an einem Riegel 9, was insbesondere der Schnittdarstellung aus Fig. 4e entnehmbar ist.

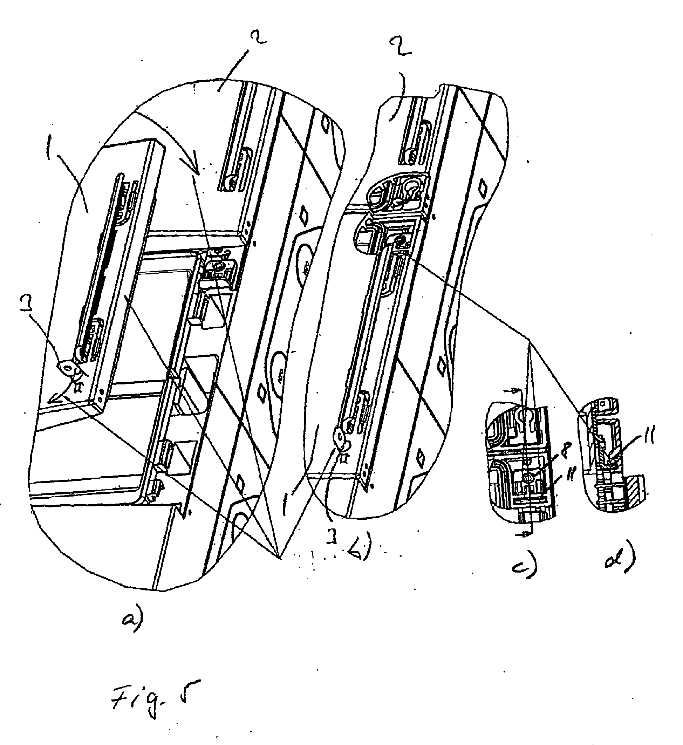

Fig. 5 schließlich zeigt, wie die erste Tür 1 bei aktivierter Verschlußeinrichtung 5, also verschlossenen zweiten Türen 2, erst geschlossen und dann mittels des Schlüssels 3 verschlossen wird. Aufgrund der geschlossenen und verschlossenen ersten Tür 1 ist auch die Betätigungseinrichtung 8 der Verschlußeinrichtung 5, nämlich der Master-Verriegelungseinrichtung 6, nicht mehr zugänglich, so daß die Verschlußeinrichtung 5 nicht deaktiviert werden kann.

Eine weitere Sicherheit gegen ein Deaktivieren der Verschlußeinrichtung 5 ist bei dem vorliegend beschriebenen bevorzugten Ausführungsbeispiel der Erfindung dadurch vorgesehen, daß die erste Tür 1 in dem Bereich, der im geschlossenen Zustand der Betätigungseinrichtung 8 der Verschlußeinrichtung 5 benachbart ist, eine Rippe 11 aufweist, die mit der Betätigungseinrichtung 8 derart zusammenwirkt, daß ein Verschieben derselben verhindert wird. Damit ist gewährleistet, daß die Verschlußeinrichtung 5 auch nicht zufällig, z. B. durch Schläge auf das Gehäuse oder durch Vibrationen, deaktiviert werden kann.

## Patentansprüche

1. Gehäuse für die Elektroinstallation, mit einer ersten Tür (1) und einer Mehrzahl von zweiten Türen (2), wobei die Türen (1, 2) im geöffneten Zustand einen Zugang zum Innenraum des Gehäuses gewährleisten und die erste Tür (1) im geschlossenen Zustand verschließbar ist, und wobei eine Verschlußeinrichtung (5) vorgesehen ist, die nur bei geöffneter erster Tür (1) betätigbar und damit in einen aktivierten oder einen deaktivierten Zustand versetzbar ist und im aktivierten Zustand bewirkt, daß die zweiten Türen (2) im geschlossenen Zustand verschlossen sind, **dadurch gekennzeichnet, daß** das Gehäuse mehrere, voneinander lösbare Gehäuseabschnitte (4) ausweist, die Türen (1, 2) übereinander angeordnet sind und die Verschlußeinrichtung (5) mehrere zusammenwirkende und voneinander lösbare Verriegelungseinrichtungen (6, 7) aufweist, die jeweils einer zweiten Tür (2) zugeordnet sind.

2. Gehäuse nach Anspruch 1, **dadurch gekennzeichnet, daß** die Verschlußeinrichtung (5) werkzeuglos betätigbar ist.

3. Gehäuse nach Anspruch 1 oder 2, **dadurch gekennzeichnet, daß** die Verschlußeinrichtung (5) als Verriegelungseinrichtung (6) mit einem Riegel (9) ausgebildet ist, so daß im aktivierten Zustand der Verschlußeinrichtung (5) ein Öffnen der zweiten Tür (2) mittels des Riegels (9) verhindert wird.

4. Gehäuse nach einem der Ansprüche 1 bis 3 , **dadurch gekennzeichnet, daß** die Verschlußeinrichtung (5) für jede zweite Tür (2) eine Verriegelungseinrichtung (6, 7) mit einem Riegel (9) aufweist, die Verriegelungseinrichtung (6) für die der ersten Tür (1) direkt benachbarte zweite Tür (2) bei geöffneter erster Tür (1) verriegelbar bzw. entriegelbar ist und die Verriegelungseinrichtungen (6, 7) derart ausgebildet und angeordnet sind, daß die Verriegelung bzw. Entriegelung der der ersten Tür (1) direkt benachbarten zweiten Tür (2) eine Verriegelung bzw. Entriegelung auch der anderen zweiten Türen (2) bewirkt.

5. Gehäuse nach einem der Ansprüche 1 bis 4, **dadurch gekennzeichnet, daß** die erste Tür (1) nur dann geschlossen werden kann, wenn die Verschlußeinrichtung (5) aktiviert ist.

6. Gehäuse nach einem der Ansprüche 1 bis 5, **dadurch gekennzeichnet, daß** einander benachbarte Verriegelungseinrichtungen (6, 7) derart aneinander fixiert sind, daß die Verriegelungseinrichtungen (6, 7) Zug bzw. Druck aufeinander ausüben können.

## Claims

1. Electrical enclosure, having a first door (1) and a plurality of second doors (2), wherein, in the open state, the doors (1, 2) ensure access to the interior of the enclosure and, in the closed state, the first door (1) can be closed, and wherein a blocking device (5) is provided which can be operated only when the first door (1) is opened and can in this way be changed to an activated or a deactivated state, and, in the activated state, results in the second doors (2) being locked in the closed state, **characterized in that** the enclosure has a plurality of enclosure sections (4) which can be detached from one another, the doors (1, 2) are arranged one above the other and the locking device (5) has a plurality of locking apparatuses (6, 7), which interact, can be detached from one another and are each associated with one second door (2).

2. Enclosure according to Claim 1, **characterized in that** the locking device (5) can be operated without any tools.

3. Enclosure according to Claim 1 or 2, **characterized in that** the locking device (5) is in the form of a locking apparatus (6) with a bolt (9) such that, when the locking device (5) is in the activated state, the bolt (9) prevents the second door (2) from being opened.

4. Enclosure according to one of Claims 1 to 3, **characterized in that** the locking device (5) for each second door (2) has a locking apparatus (6, 7) with a bolt (9), the locking apparatus (6) for the second door (2) which is directly adjacent to the first door (1) can be locked and unlocked when the first door (1) is open, and the locking apparatuses (6, 7) are designed and arranged such that the locking and unlocking of the second door (2) which is directly adjacent to the first door (1) results in respective locking and unlocking of the other second doors (2) as well.

5. Enclosure according to one of Claims 1 to 4, **characterized in that** the first door (1) can be closed only when the locking device (5) has been activated.

6. Enclosure according to one of Claims 1 to 5, **characterized in that** mutually adjacent locking apparatuses (6, 7) are fixed to one another such that the locking apparatuses (6, 7) can exert tension and pressure on one another.

## Revendications

1. Boîtier pour installation électrique, avec une première trappe (1) et avec plusieurs secondes trappes (2), les trappes (1, 2) garantissant à l'état ouvert un accès à l'intérieur du boîtier, la première trappe (1) prouvant être bloquée à l'état fermé et un dispositif de blocage (5) étant prévu, lequel dispositif de blocage ne peut être actionné que lorsque la première trappe (1) est ouverte et peut alors être mis dans un état activé ou dans un état désactivé et lequel dispositif de blocage, dans l'état activé, fait en sorte que les secondes trappes (2) sont bloquées à l'état fermé, **caractérisé en ce que** le boîtier comporte plusieurs parties de bottier (4) qui peuvent être détachées les unes des autres, **en ce que** les trappes (1, 2) sont agencées les unes au-dessus des autres et **en ce que** le dispositif de blocage (5) comporte plusieurs dispositifs de verrouillage (6, 7) qui coopèrent les uns avec les autres, qui peuvent être détachés les uns des autres et qui sont associés chacun à une seconde trappe (2).

2. Boîtier selon la revendication 1, **caractérisé en ce que** le dispositif de blocage (5) peut être actionné sans outil.

3. Boîtier selon la revendication 1 ou 2, **caractérisé en ce que** le dispositif de blocage (5) est conçu comme dispositif de verrouillage (6) avec un verrou (9) de telle sorte que, lorsque le dispositif de blocage (5) est à l'état activé, une ouverture de la seconde trappe (2) est empêchée au moyen du verrou (9).

4. Boîtier selon l'une des revendications 1 à 3, **caractérisé en ce que** le dispositif de blocage (5) comporte pour chaque seconde trappe (2) un dispositif de verrouillage (6, 7) avec un verrou (9), **en ce que** le dispositif de verrouillage (6) destiné à la seconde trappe (2) directement voisine de la première trappe (1) peut être verrouillé ou déverrouillé lorsque la première trappe (1) est ouverte et **en ce que** les dispositifs de verrouillage (6, 7) sont conçus et agencés de telle sorte que le verrouillage respectivement le déverrouillage de la seconde trappe (2) directement voisine de la première trappe (1) provoque un verrouillage respectivement un déverrouillage des autres secondes trappes (2).

5. Boîtier selon l'une des revendications 1 à 4, **caractérisé en ce que** la première trappe (1) ne peut être fermée que si le dispositif de blocage (5) est activé.

6. Boîtier selon l'une des revendications 1 à 5, **caractérisé en ce que** des dispositifs de verrouillage (6, 7) voisins les uns des autres sont fixés de telle sorte les uns aux autres que les dispositifs de verrouillage (6, 7) peuvent exercer une traction ou une poussée les uns sur les autres.
